# EUROPÄISCHE PATENTANMELDUNG

(11) **EP 0 965 816 A2**
(43) Veröffentlichungstag der Anmeldung: **22.12.1999**
(21) Anmeldenummer: 99111646.8
(22) Anmeldetag: 16.06.1999
(51) Int. Cl.: G01B 5/012, G01B 11/03

(54) **Vorrichtung zur Messung der geometrischen Struktur eines Objekts**

(30) Priorität: 17.06.1998 DE 19826641; 26.06.1998 DE 19828701
(71) Anmelder: MYCRONA Gesellschaft für innovative Messtechnik mbH, 66793 Saarwellingen (DE)
(72) Erfinder: Schroeder, Mario, 66346 Püttlingen (DE)
(74) Vertreter: Mierswa, Klaus, Dipl.-Ing.

(57) **Zusammenfassung**

Die Erfindung betriftt eine Vorrichtung zur Messung der geometrischen Struktur eines Objekts (4) mit einer optischen Erfassungseinrichtung (5) und einem Taster (1), der einen Schaft (2) und ein damit verbundenes Antastelement (3) aufweist, wobei das Antastelement (3) durch Berührung mit dem Objekt (4) auslenkbar und die Positionsänderung des Antastelements (3) und/oder des Schaftes (2) und/oder mit dem Schaft (2) verbundener Zielmarken mit der optischen Erfassungseinrichtung (5) erfaßbar ist, und bei der der Taster (1) und die optische Erfassungseinrichtung (5) unabhängig voneinander beweglich sind. Dadurch wird der Vorgang des Justierens eines solchen opto-taktilen Meßsystems wesentlich vereinfacht.

## Beschreibung

### Technisches Gebiet:

Die Erfindung betrifft eine Vorrichtung zur Messung der geometrischen Struktur eines Objekts mit einer optischen Erfassungseinrichtung und einem Taster, der einen Schaft und ein damit verbundenes Antastelement aufweist, auf der Grundlage eines opto-taktilen Meßverfahrens, gemäß dem Oberbegriff von Anspruch 1.

### Stand der Technik:

Zur Erfassung der geometrischen Struktur eines Meßobjektes sind Koordinaten-Meßgeräte bekannt, mit denen die Oberfläche des Meßobjektes mechanisch abgetastet wird. Diese taktilen Koordinaten-Meßgeräte weisen als Taster einen im wesentlichen starren Schaft auf, der mit einem Antastelement, z.B. einer Kugel oder einem Tastkreuz, verbunden ist. Taster und Objekt werden relativ zueinander bewegt. Bei der Berührung des Objekts durch das Antastelement wird über den im wesentlichen starren Schaft eine Kraft übertragen, wodurch ein Schalter betätigt und ein Schaltsignal erzeugt wird. Dieses Signal wird aufgezeichnet und dient zusammen mit den Informationen über die relative Lage von Taster bzw. Antastelement und Meßobjekt zum Aufbau eines zwei- oder dreidimensionalen Bildes der Oberfläche des Objekts. Nachteilig an der rein taktilen Koordinaten-Meßtechnik ist, daß sich die Taster nicht beliebig miniaturisieren lassen und damit dem Trend zur Miniaturisierung von Werkstücken nicht zu folgen imstande sind. Feine Oberflächenstrukturen, lassen sich mit derartigen taktilen Meßvorrichtungen damit nur ungenau erfassen. Sie sind somit zur Vermessung einer zunehmenden Anzahl von Werkstücken nur bedingt geeignet. Denn der Schaft muß stets so starr sein, daß er bei Berührung des Objekts eine Kraft zu übertragen imstande ist, wodurch die Schaft- und Tastelementabmessungen nicht beliebig verringert werden können. Weiterhin sinkt die Tastgenauigkeit bei abnehmendem Schaftdurchmesser wegen der zunehmend elastischen Verformbarkeit des Schaftes.

Eine Miniaturisierung, bei der diese Probleme vermieden werden, wurde durch die Kombination eines taktilen Koordinaten-Meßsystems mit optischer Erfassung der Position des Tastelements ermöglicht. Ein derartiger opto-taktiler Taster ist in der DE 297 10 242 sowie in G. Ji, H. Schwenke, E. Trapet, Opto-taktiler Taster, Quality-Engineering 7-8/98, Seite 40 bis 43 beschrieben. Bei diesem opto-taktilen Taster wird die Änderung der Tastkugelposition bei Berührung des Objekts nicht durch Kraftübertragung, sondern optisch mittels einer CCD-Kamera erfaßt. Als Taster wird eine Lichtleitfaser verwendet. Sie ist an der Spitze mit einem kugelförmigen Antastelement versehen, das durch die Faser beleuchtet wird. Die Lichtleitfaser wird dabei so an die Kamera montiert, daß sich das Antastelement in der Fokusebene in der Nähe der optischen Achse befindet und daher scharf abgebildet wird. Bei der Berührung des Tastelements mit der Werkstückoberfläche wird es relativ zur Kamera verschoben, so daß der abgebildete Lichtfleck seine Position auf dem Sensor ändert. Diese Positionsänderung kann detektiert und ausgewertet werden. Vorteil dieser Technik ist, daß die Detektion der Antastung keine Kraftübertragung zwischen Tastelement und Sensorik erforderlich ist. Dadurch werden alle Einflüsse durch elastische oder plastische Verformung des Taststiftes ausgeschlossen. Der Schaft, hier die Glasfaser, kann daher extrem dünn ausgeführt werden, wodurch eine hohe Abtastgenauigkeit erreichbar ist.

Die Miniaturisierung des Tasters führt jedoch auch zu Problemen beim praktischen Einsatz eines derartigen opto-taktilen Meßsystems. Insbesondere macht die mechanische Empfindlichkeit des Tasters sein häufiges Auswechseln erforderlich, denn ein als Glasfaser ausgebildeter Tasterschaft geht bei unvorsichtiger Handhabung, z.B. bei einem Auswechseln des Meßobjekts, leicht zu Bruch. Nach dem Auswechseln des Tasters muß die Antastkugel, die sich am Ende des Schaftes befindet, manuell in die Fokusebene der Kamera einjustiert werden. Dieses geschieht meist durch manuelles Anpassen der Schaftlänge und ist wegen der sehr kleinen Abmessungen des Tasters und wegen der großen Vergrößerung des optischen Systems umständlich und zeitaufwendig.

Des weiteren führt die Miniaturisierung dazu, daß das Antastelement aufgrund von Adhäsionskräften oder elektrostatischer Aufladung am Meßobjekt haften bleibt und nicht allein aufgrund seines Eigengewichts in die Ausgangsposition zurückkehrt. Dies kann zu Meßungenauigkeiten führen. Auch hier ist noch keine befriedigende Lösung gefunden.

Schließlich wird bei derartigen Koordinaten-Meßmaschinen mit Faser-Meßtastern kleinster Bauart auch die Reinigung des Antastelements erschwert. Ein verschmutztes Antastelement kann zu Meßungenauigkeiten führen, da die Gefahr des Anhaftens am Meßobjekt besteht oder aufgrund anhaftender Schmutzpartikel eine falsche Position des Antastelements detektiert wird.

### Technische Aufgabe:

Der Erfindung liegt daher die Aufgabe zugrunde, ein Koordinaten-Meßsystem auf opto-taktiler Grundlage derart weiter zu entwickeln, daß die Wartung und Instandsetzung, insbesondere nach einem Auswechseln des Tasters und die Justierung des Systems einfach und zeitsparend durchführbar ist.

### Offenbarung der Erfindung:

Die Lösung der Aufgabe besteht bei einer Vorrichtung zur Messung der geometrischen Struktur eines Objekts mit einer optischen Erfassungseinrichtung und einem Taster, der einen Schaft und ein damit verbundenes Antastelement aufweist, wobei das Antastelement durch Berührung mit dem Objekt auslenkbar und die Positionsänderung des Antastelements und/oder des Schaftes und/oder mit dem Schaft verbundener Zielmarken mit der optischen Erfassungseinrichtung erfaßbar ist, darin, daß der Taster und die optische Erfassungseinrichtung unabhängig voneinander beweglich sind. Vorteilhafte Weiterbildungen einer solchen Mehrkoordinaten-Meßmaschine mit einem Faser-Meßtaster kleinster Bauart sind in den Unteransprüchen gekennzeichnet.

Durch die relativ zum Taster bewegliche, vorzugsweise verfahrbare, optische Erfassungseinrichtung wird das Justieren der Vorrichtung vor oder während der Vermessung eines Objektes erheblich vereinfacht. Denn nun können die optische Erfassungseinrichtung und der Taster so lange relativ zueinander verschoben bzw. automatisch oder ferngesteuert verfahren werden, bis das Bild des Antastelements und/oder einer Zielmarke an definierter Stelle innerhalb des Erfassungsbereichs der optischen Erfassungseinrichtung bzw. des von ihr aufgezeichneten Bildes liegt. Dabei ist es zunächst wesentlich, daß das Antastelement und/oder die Zielmarke in die Fokusebene der optischen Erfassungseinrichtung gebracht wird. Erfindungsgemäß kann daher ausreichen, wenn Taster und Erfassungseinrichtung in axialer Richtung, d.h. in Beobachtungsrichtung, relativ zueinander beweglich sind. Dann kann das Antastelement in die Fokalebene der optischen Erfassungseinrichtung gefahren werden. Um eine bessere Justage zu ermöglichen, die z.B. nach einem Auswechseln des Tasters und seiner Halterung notwendig wird, ist vorzugsweise eine Beweglichkeit in allen drei Raumrichtungen vorgesehen.

Um die relative Verfahrbarkeit von Taster und Erfassungseinrichtung zu gewährleisten, ist für wenigstens eines der Bauelemente eine Positioniereinrichtung vorgesehen, vorzugsweise für beide. Das Bauelement ist mit dieser gekoppelt und kann dadurch mit einer hohen Genauigkeit positioniert werden. Vorzugsweise werden die Positioniereinheiten mit einem elektrischen Motor, zum Beispiel Schrittmotor, betrieben und können ferngesteuert werden, so daß das System bequem von einem Schaltpult oder Kontrollrechner aus bedienbar ist.

Dem Taster ist vorzugsweise eine Positioniereinheit zugeordnet, die zum Verschieben oder Verfahren des Tasters beim Abtasten des Meßobjekts verwendet wird. Die optische Erfassungseinrichtung wird beim Abtasten des Objekts derart mit dem Taster mitbewegt, daß sich der Taster bzw. das Antastelement stets in definierter räumlicher Position relativ zur Erfassungseinrichtung befindet. Um dies zu erreichen, ist die Erfassungseinrichtung bzw. die ihr zugeordnete Positioniereinrichtung vorzugsweise mit der dem Taster zugeordneten Positioniereinrichtung gekoppelt. Durch die dem Taster zugeordnete Positioniereinrichtung können somit Taster und Erfassungseinrichtung im Laborbezugssystem bewegt werden und sind gemeinsam relativ zum Meßobjekt verfahrbar. Durch die der Erfassungseinrichtung zugeordnete Positioniereinrichtung kann die Erfassungseinrichtung zudem im Tasterbezugssystem bewegt und damit die Vorrichtung justiert werden.

Um die Abmessungen des Tasters so gering wie möglich zu halten, besteht der Schaft vorzugsweise aus einem Draht oder einer Lichtleitfaser und ist so dünn, daß das Antastelement schon bei leichter Berührung des Meßobjekts aus seiner Ruhelage ausgelenkt wird. Der Schaft ist vorzugsweise biegeelastisch, um eine leichte Auslenkbarkeit und damit eine hohe Antastgenauigkeit zu gewährleisten. Alternativ kann ein im wesentlichen starrer Schaft vorgesehen sein, der mit einem Gelenk derart an der Halterung des Tasters befestigt ist, daß er bei Berührung des Objekts ausgelenkt wird. Eine biegeelastische oder gelenkig aufgehängte Gestaltung des Schaftes ist möglich, da durch die optische Erfassung der Position des Antastelementes keine Kraft über den Schaft übertragen werden muß. Da schon leichte Berührungen zu einem Auslenken des Antastelementes führen, welches über die Abbildungsoptik detektiert wird, sind Meßgenauigkeiten im Bereich weniger Mikrometer und weniger erreichbar.

Vorzugsweise weist der Schaft einen Durchmesser von maximal 200 µm, vorzugsweise zwischen 25 µm und 50 µm auf. Das Antastelement ist vorzugsweise eine Kugel mit einem Durchmesser von maximal 500 µm, vorzugsweise zwischen 30 µm und 100 µm. Dieses Antastelement ist entweder auf das Schaffende aufgeklebt oder durch Anschmelzen des Schaffendes entstanden. Unter Umständen kann auch das Schaftende selbst als Antastelement fungieren, ohne daß es einer zusätzlichen Verdickung bedarf.

Das Meßprinzip beruht auf der optischen Erfassung der Position des Antastelementes oder des Schaftes oder einer mit dem Schaft verbundenen Zielmarke. Als optische Erfassungseinrichtung dient dabei insbesondere ein CCD-Sensor mit einer entsprechenden Abbildungsoptik, die den Taster bzw. das Antastelement oder die Zielmarke auf dem Sensor abbildet. Der CCD-Sensor ist ein Zeilen- oder Flächensensor. Die Bildsignale der Erfassungseinrichtung werden einer Auswerteeinheit zugeführt und sind dort auswertbar, z.B. anhand einer optischen Wiedergabe des vom Sensor aufgezeichneten Bildes. Auf dieses Bild können Bildverarbeitungsverfahren angewendet werden zur Erfassung von Änderungen der Position des Antastelements bzw. der Zielmarke oder des Schaftes. Aus der Abweichung des ein- oder zweidimensionalen Bildes der Zielmarke oder des Antastelements von einer Sollposition im Bild kann ein Steuersignal gewonnen werden, welches zur automatischen Anpassung der tatsächlichen Position der Zielmarke oder des Antastelements mittels der zugeordneten Positioniereinheit dient, insbesondere durch einen Regelkreis. Auf diese Weise kann das Justieren des Antastelements vorteilhaft automatisiert werden.

Eine andere Möglichkeit einer optischen Erfassungseinrichtung ist die Verwendung eines Punktdetektors mit einer Abbildungsoptik. welche das Antastelement bzw. eine Zielmarke in der Ruheposition des Schaftes direkt auf den Punktdetektor abbildet. Der Punktdetektor gibt ein Ausgangssignal ab, welches ein Maß für die detektierte Lichtmenge ist und damit keine Bildinformation trägt. Der Punktdetektor ist beispielsweise ein Fotodetektor in Verbindung mit einer davor angeordneten Lochblende, deren Öffnung sich am Ort des Bildes des Abtastelementes bzw. der Zielmarke befindet und etwa so groß wie bzw. etwas kleiner als dessen Bildgröße ist.

Die Zielmarke oder das Antastelement kann in diesem Fall selbstleuchtend sein, wobei das davon abgestrahlte Licht im Ruhezustand durch die Abbildungsoptik auf den Punktdetektor abgebildet wird. Wird der Schaft ausgelenkt, so wird das von der Zielmarke bzw. dem Antastelement ausgesendete Licht vom Punktdetektor gar nicht oder nur teilweise detektiert, z. B. im Falle der Lochblende durch diese ausgeblendet. Auf diese Weise wird eine Diskriminierbarkeit der Position der Zielmarke oder des Antastelementes senkrecht zur optischen Achse, aber auch in Richtung der optischen Achse erreicht. Aus der Amplitude des Ausgangssignals des Punktdetektors läßt sich direkt ablesen, ob eine Verschiebung des Schaftes durch Berührung des Meßobjektes stattgefunden hat. Beispielsweise wird eine Berührung dann diagnostiziert, wenn die Amplitude des Ausgangssignals eine bestimmte Schwelle unterschreitet. Da die Erfassungseinrichtung in diesem Fall keine komplizierten Bildinformationen ermittelt, ist keine Bildverarbeitung notwendig. Der Punktdetektor kann auch durch ein Detektionsfeld eines CCD-Sensors gebildet werden, dessen Signal separat ausgewertet wird.

Bei der letztgenannten optischen Erfassungsmethode ist es vorteilhaft, daß das zu detektierende Antastelement bzw. die Zielmarke aktiv leuchtet. Zielmarke und Antastelement können auch identisch sein. Bei der Erfassung mittels einer Kamera oder eines Zeilensensors ist dies nicht notwendig, aber vorteilhaft. Zur Beleuchtung der Zielmarke bzw. des Antastelements ist vorzugsweise im Schaft eine Lichtleitfaser mitgeführt. Diese kann auch den Schaft selbst bilden. Um eine möglichst gleichmäßige Lichtabstrahlung zu gewährleisten, vorzugsweise in alle Raumrichtungen, ist die Oberfläche des Antastelements oder der Zielmarke vorzugsweise leicht aufgerauht bzw. mattiert.

Bei nicht selbstleuchtender Zielmarke bzw. Antastelement wird der optische Kontrast zwischen Zielmarke bzw. Antastelement und der Umgebung zur Erfassung der Position der Zielmarke bzw. des Antastelements herangezogen. Um den Kontrast zu erhöhen, kann die Zielmarke bzw. das Antastelement dazu von unten oder von der Seite beleuchtet werden. Auch hier ist von Vorteil, wenn die Oberfläche des Antastelements oder der Zielmarke leicht aufgerauht bzw. mattiert ist.

Somit besteht die Tastkugel oder wenigstens das Schaftende des Antastelements aus Glas und ist mattiert und kann von innen beleuchtet werden zwecks besserer Lichtabstrahlung und zur besseren Erkennbarkeit durch eine Kamera.

Die Lösung der Aufgabe besteht des weiteren in einer Mehrkoordinaten-Meßmaschine, die einen Faser-Meßtaster kleinster Bauart und eine Kamera zu dessen optischer Erfassung aufweist, wobei die Meßmaschine eine Vorrichtung aufweist, welche Blasluft herbeiführt, die in Luftstößen über wenigstens einen Teil des Meßtasters streicht, um diesen im Falle eines Haftenbleibens nach einer Antastung an ein Meßobjekt mittels eines Gas- bzw. Luftstoßes wieder von der Haftstelle ablösen zu können.

Dazu weist der Taster vorzugsweise einen Ausleger auf; der mit seinem Schaft verbunden ist und mit welchem der Schaft an die Meßstelle heranführbar ist. Dabei ist der Ausleger wenigstens teilweise hohl und einen Gasstrom zum Antastelement zu leiten imstande, vorzugsweise einen Luftstrom.

Ein Gas oder ein Gasgemisch bzw. Luftgemisch, welches vorzugsweise in einem Druckbehälter enthalten ist, wird unter Druck kurzzeitig durch den Ausleger geblasen, insbesondere nachdem an einer Antastposition die Anwesenheit des Meßobjekts detektiert wurde. Durch den Gasstrom wird das Antastelement vom Objekt bzw. der Haftstelle gelöst, falls es an diesem angehaftet ist, und kehrt in seine Ruhelage im Tasterbezugssystem zurück. Der Gasstrom sollte vorzugsweise in vertikaler Richtung verlaufen, um das Antastelement weitgehend gleichmäßig zu umhüllen und nicht in Schwingungen zu versetzen. Gleichwohl sollte der Gasdruck so hoch sein, daß die Adhäsionskräfte, die das Antastelement gegebenenfalls am Objekt anhaften lassen, überwunden werden. Das Gas ist vorzugsweise Luft, die sich in einem Druckluftbehälter befindet. Dieser ist an den Ausleger an dessen dem Antastelement abgewandten Ende anschließbar. Die Verbindung zwischen Druckluftbehälter und Ausleger kann vorzugsweise ferngesteuert freigegeben werden.

Der steife Ausleger dient gleichzeitig dazu, den Schaft und das Antastelement an den Ort der Messung zu führen. Es ist vorzugsweise bügelförmig ausgebildet, z.B. in Form einer Röhre, und mittels einer Positioniereinheit zum Abrastern des Objekts verfahrbar. Der Ausleger verläuft vorzugsweise größtenteils waagerecht, um im Bereich oberhalb der Meßstelle abzuknicken. In diesem Bereich endet der Ausleger und gibt den Schaft frei, so daß dieser im Bereich der Meßstelle frei beweglich ist.

Vorzugsweise ist die Innenwandung des Auslegers verspiegelt, so daß Licht durch den Ausleger auf das Antastelement und/oder auf eine Zielmarke leitbar ist. Damit kann das Antastelement und/oder die Zielmarke gezielt durch den Ausleger beleuchtet werden. Die Vorrichtung kann somit kompakter ausgeführt werden, da kein Raum für eine separate Lichtquelle vorgesehen werden muß. Alternativ kann die Lichtquelle auch am Ausleger im Bereich oberhalb der Meßstelle befestigt werden. Des weiteren können zwei Kanäle innerhalb des Auslegers vorgesehen sein, von denen einer hohl ist zur Leitung des Gasstroms und der andere beispielsweise eine Lichtleitfaser ist. Die Beleuchtung des Antastelements und/oder der Zielmarke kann auch von innen erfolgen, wenn der Schaft eine Lichtleitfaser enthält oder aus einer Lichtleitfaser gebildet ist.

Um die Gefahr des Anhaftens des Antastelements am Objekt weiter zu vermindern, wird vorzugsweise die Antastfläche verringert, d. h. die Fläche des Antastelements, die das Objekt berührt. Dadurch lassen sich des weiteren höhere Meßgenauigkeiten erreichen, da ein engeres Abrastern möglich wird. Vorzugsweise ist das Antastelement eine Kugel mit einer aufgesetzten Spitze, wobei die Spitze vorzugsweise konisch und in der Ruhelage des Schaftes horizontal ausgerichtet ist. Das Antastelement kann auch eine Scheibe oder ein Ring sein, wobei es vorzugsweise in der Ruhelage des Schaftes horizontal ausgerichtet ist.

Alternativ oder als Ergänzung zum Luftstrom ist zur Reinigung eines Faser-Meßtasters ein Reinigungsbad vorgesehen, in welches das Antastelement und der Schaft ganz oder teilweise eingetaucht wird. Das Reinigungsbad kann integraler Bestandteil der Meßvorrichtung sein. Es ist vorzugsweise ein Ultraschallbad.

Des weiteren ist bei einer Mehrkoordinaten-Meßmaschine eine Lichtquelle zur Beleuchtung des Antastelements und/oder einer Zielmarke sowie und eine Kamera zur optischen Erfassung des Antastelements und/oder der Zielmarke vorgesehen, welche vorzugsweise eine ringförmig angeordnete Lichtquelle kleinster Bauart oder eine ringförmig Licht abstrahlende Lichtquelle ist und sich vorzugsweise in der Halterung befindet, die auch den Faser-Meßtaster hält.

Zur Vereinfachung des Austauschs bzw. der Erneuerung des Antastelements an einer Mehrkoordinaten-Meßmaschine, die einen Faser-Meßtaster kleinster Bauart aus Glas und eine längs einer Achse verfahrbare Kamera zu dessen optischer Erfassung aufweist, ist eine Vorrichtung vorgesehen, mit welcher eine abgebrochene Faser des Faser-Meßtasters nachgeschoben und mit Hilfe der Vorrichtung durch Erhitzen des vorderen Endes eine neue Meßkugel angeschmolzen wird.

Kurzbeschreibung der Zeichnung, wobei zeigen:

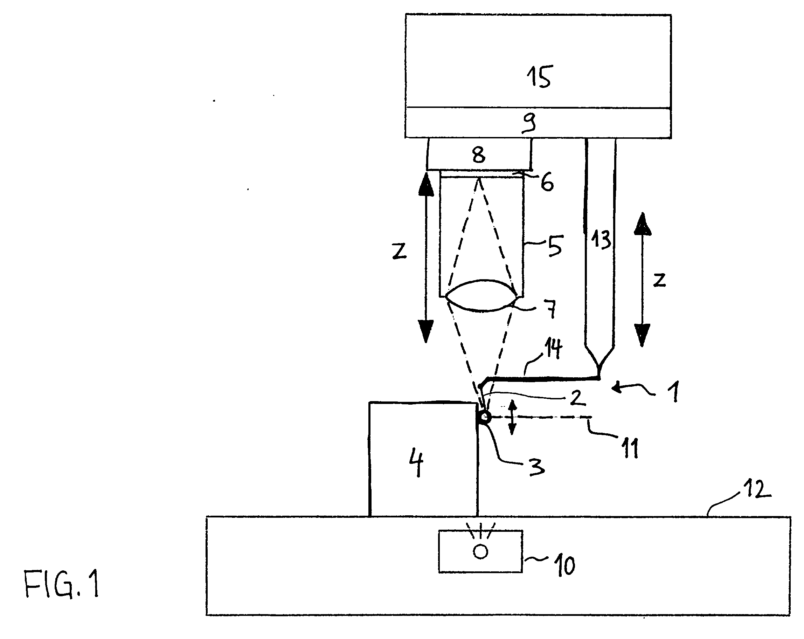

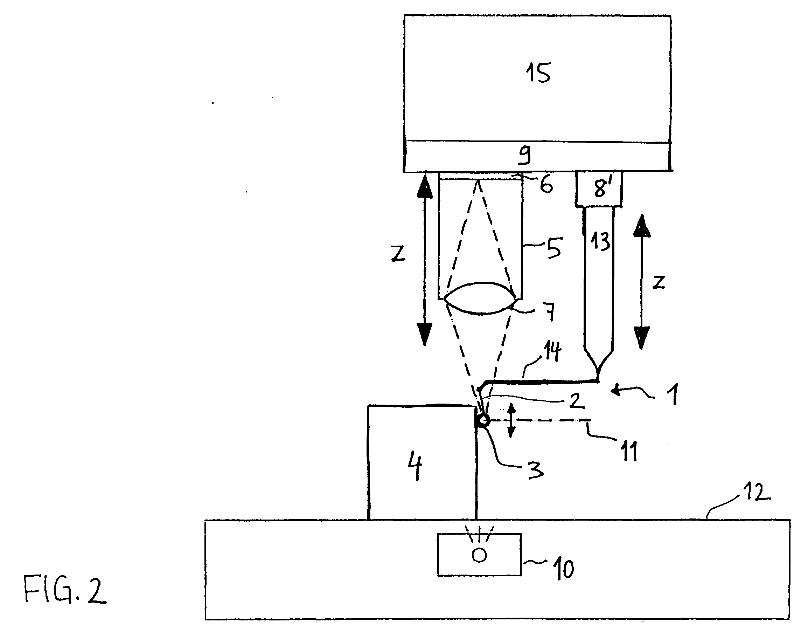

- Figuren 1 und 2: schematische Darstellungen einer erfindungsgemäßen Vorrichtung.

Figur 1 zeigt schematisch eine erfindungsgemäße Vorrichtung mit einem Taster 1 und einer optischen Erfassungseinrichtung 5. Die Vorrichtung dient zur Erfassung der geometrischen Struktur eines Objektes 4, welches sich auf einem Meßtisch 12 befindet, durch Ab- bzw. Antasten seiner Oberfläche. Der Taster 1 besteht aus einem steifen bügelförmigen Ausleger 14, an welchem ein biegeelastischer Schaft 2 beweglich, vorzugsweise pendelnd, aufgehängt ist. Der Ausleger 14 kann auch hohl in Form eines Hüllrohrs ausgeführt sein, durch dessen Hohlraum der Schaft 2 beispielsweise als Draht oder Lichtleitfaser geführt ist. Durch den Hohlraum kann in einer Ausbildung der Erfindung ein Gasstrom geleitet werden, um im Falle des Anhaftens den Schaft bzw. das damit verbundene Antastelement 3 vom Meßobjekt zu lösen. Der Taster 1 ist über eine Halterung 13 mit einer Positioniereinrichtung 9 und darüber mit einer weiteren Halterung 15 verbunden. Die Halterung 15 dient zur Halterung des optischen Systems sowie des Tasters und ist in der Regel mit dem Meßtisch 12 starr verbunden. Mit dieser Positioniereinrichtung 9 kann der Taster in drei Raumrichtungen, zweckmäßig senkrecht und parallel zur Meßtischebene, verfahren werden, so daß ein Ab- bzw. Antasten der gesamten Oberfläche des Meßobjektes 4 möglich ist.

Der Taster weist am meßtischseitigen Ende des Schaftes 2 ein Antastelement 3 auf, welches hier eine Kugel ist. Die dargestellten Größenverhältnisse sind rein schematisch. Wird der Taster mit der Positioniereinrichtung 9 an das Objekt 4 herangefahren, so berührt das Antastelement 3 das Meßobjekt 4 und wird aus seiner Ruhelage ausgelenkt. Diese Positionsänderung des Antastelements 3 wird mit der Erfassungseinrichtung 5 detektiert. Diese besteht dazu aus einer Abbildungsoptik 7 - hier schematisch durch eine Linse angedeutet - und einem CCD-Zeilen- oder Flächen-Sensor 6. Mit der Abbildungsoptik 7 wird die Ebene, in welcher sich das Antastelement im Ruhezustand befindet, auf den CCD-Sensor 6 abgebildet. Daher sind Taster 1 und Erfassungseinrichtung 5 bei der Justage des Systems so relativ zueinander zu positionieren, daß sich das Antastelement 3 in der Fokalebene 11 der Erfassungseinrichtung 5 befindet. Des Weiteren sollte sich das Antastelement 3 im Bereich der optischen Achse der Abbildungsoptik 7 befinden, damit es etwa in der Mitte des aufgezeichneten Bildes erscheint und seine Positionsänderung leicht erfaßt werden kann.

Da diese Anpassung der Positionen von Erfassungseinrichtung 5 und Taster 1 besonders nach einem Auswechseln des Schaftes 2 Probleme machen kann, ist erfindungsgemäß neben der Scan-Positioniereinrichtung 9 eine weitere Positioniereinheit 8 vorgesehen. Diese ist im dargestellten Beispiel der Erfassungseinrichtung 5 zugeordnet und ermöglicht es, diese zumindest in axialer (z-) Richtung relativ zum Taster 1 zu verschieben. Die der Erfassungseinrichtung zugeordnete (Justier-)Positioniereinrichtung 8 ist auf die (Scan-) Positioniereinrichtung 9 aufgesetzt, welche dem Taster 1 zugeordnet ist. Durch diese Anordnung folgt die Erfassungseinrichtung 5 während der Messung allen Bewegungen des Tasters, wobei die räumliche Lage von Taster und Erfassungseinrichtung relativ zueinander unverändert bleibt. Lediglich bei der Justage des Systems wird diese durch die Positioniereinrichtung 8 angepaßt. Wenn ein Ausleger 14 definierter Länge und fester Ausrichtung verwendet wird, der beispielsweise mit der Halterung 13 fest verbunden ist, kann es für eine Neujustage des Systems ausreichen, wenn die Positioniereinrichtung 8, die der Erfassungseinrichtung 5 zugeordnet ist, lediglich in Richtung der optischen Achse bzw. senkrecht zum Meßtisch verschiebbar ist. Denn bei einem Auswechseln des Schaftes wird sich in der Regel nur dessen Länge ändern. Vorteilhaft ist jedoch, wenn die Positioniereinrichtung 8 auch eine laterale Verschiebbarkeit der Erfassungseinrichtung 5 ermöglicht.

Alternativ zum dargestellten Beispiel kann anstelle der Erfassungseinrichtung 5 der Taster 1 mit einer unabhängigen Positioniereinrichtung 8' ausgestattet sein. Dies ist in Figur 2 dargestellt. Schließlich können beide Elemente unabhängig voneinander positionierbar sein, wobei sie beim Abtasten des Meßobjekts allerdings synchron bewegt werden müssen.

Das Antastelement 3 das Her als Zielmarke dient, ist vorzugsweise selbstleuchtend. In diesem Fall wird die Beleuchtung vorteilhaft über eine Lichtleitfaser vorgenommen, die durch die Halterung 13 und den Ausleger 14 von einer Lichtquelle kommend geführt ist und den Schaft 2 bildet. Alternativ ist das Antastelement 3 nicht selbstleuchtend, wobei die Meßstelle durch eine externe Lichtquelle 10 beleuchtet wird.

### Gewerbliche Anwendbarkeit:

Durch die Erfindung wird ermöglicht, die Wartung und Instandsetzung von opto-taktilen Koordinaten-Meßmaschinen zu vereinfachen und dadurch deren praktische Einsetzbarkeit und Handhabbarkeit zu erleichtern. Die Erfindung läßt sich daher vorteilhaft im Bereich der Mikromechanik gewerblich anwenden.

### Liste der Bezugszeichen:

- 1: Taster
- 2: Schaft
- 3: Antastelement
- 4: Objekt
- 5: Erfassungseinrichtung
- 6: CCD-Sensor
- 7: Abbildungsoptik
- 8: Positioniereinrichtung für Erfassungseinrichtung
- 8': Positioniereinrichtung für Taster
- 9: gemeinsame Positioniereinrichtung für Taster und Erfassungseinrichtung
- 10: Lichtquelle
- 11: Fokalebene
- 12: Meßtisch
- 13: Halterung des Tasters
- 14: Ausleger
- 15: Halterung des Tasters und der Erfassungseinrichung

## Patentansprüche

1. Vorrichtung zur Messung der geometrischen Struktur eines Objekts (4) mit einer optischen Erfassungseinrichtung (5) und einem Taster (1), der einen Schaft (2) und ein damit verbundenes Antastelement (3) aufweist, wobei das Antastelement (3) durch Berührung mit dem Objekt (4) auslenkbar und die Positionsänderung des Antastelements (3) und/oder des Schaftes (2) und/oder mit dem Schaff (2) verbundener Zielmarken mit der optischen Erfassungseinrichtung (5) erfaßbar ist, dadurch gekennzeichnet,
daß Taster (1) und optische Erfassungseinrichtung (5) unabhängig voneinander beweglich sind.

2. Vorrichtung nach Anspruch 1, dadurch gekennzeichnet,
daß der optischen Erfassungseinrichtung (5) oder dem Taster (1) eine erste Positioniereinrichtung (8, 8') zugeordnet ist, mittels derer die Erfassungeinrichtung (5) relativ zum Taster (1) verfahrbar ist.

3. Vorrichtung nach Anspruch 1 oder 2, dadurch gekennzeichnet,
daß dem Taster (1) und/oder der Erfassungseinrichtung (5) eine zweite Positioniereinrichtung (9) zugeordnet ist, mittels derer der Taster (1) relativ zum Objekt (4) verfahrbar ist, wobei die der Erfassungseinrichtung (5) zugeordnete erste Positioniereinrichtung (8) mit der zweiten Positioniereinrichtung (9) derart gekoppelt ist, daß die Erfassungseinrichtung (5) bei Bewegungen des Tasters (1) mitgenommen wird.

4. Vorrichtung nach einem der vorangegangenen Ansprüche,
dadurch gekennzeichnet, daß die optische Erfassungseinrichtung (5) wenigstens eine Kamera oder einen CCD-Sensor (6) und eine Abbildungsoptik (7) umfaßt.

5. Vorrichtung nach einem der vorangegangenen Ansprüche,
dadurch gekennzeichnet, daß die optische Erfassungseinrichtung (5) Bestandteil eines Photogrammetriesystems ist.

6. Vorrichtung nach einem der vorangegangenen Ansprüche,
dadurch gekennzeichnet, daß der Schaft (2) biegeelastisch ist, insbesondere aus einem dünnen Draht oder einer Lichtleitfaser besteht.

7. Vorrichtung nach einem der vorangegangenen Ansprüche,
dadurch gekennzeichnet, daß der Schaft (2) aus einem Draht oder einer Lichtleitfaser besteht und so dünn ist, daß das Antastelement (3) schon bei leichter Berührung des Objekts (4) aus seiner Ruhelage ausgelenkt wird.

8. Vorrichtung nach Anspruch 7, dadurch gekennzeichnet,
daß der Schaft (2) einen Durchmesser von maximal 200 µm, vorzugsweise zwischen 25 µm und 100 µm aufweist.

9. Vorrichtung nach einem der vorangegangenen Ansprüche,
dadurch gekennzeichnet, daß das Antastelement (3) eine Kugel mit einem Durchmesser von maximal 300 µm, vorzugsweise zwischen 30 µm und 100 µm ist.

10. Vorrichtung nach einem der Ansprüche 1 bis 8,
dadurch gekennzeichnet, daß das Antastelement (3) durch das Schaftende gebildet ist.

11. Vorrichtung nach einem der Ansprüche 9 oder 10, dadurch gekennzeichnet,
dass die Tastkugel oder wenigstens das Schaftende des Antastelements (3) aus Glas besteht und mattiert ist.

12. Vorrichtung nach einem der Ansprüche 9 bis 11, dadurch gekennzeichnet,
dass das Antastelement eine Kugel mit einer aufgesetzten Spitze ist, wobei die Spitze vorzugsweise konisch und in der Ruhelage des Schaftes horizontal ausgerichtet ist, bzw. dass das Antastelement eine Scheibe oder ein Ring ist, die bzw. der in der Ruhelage des Schaftes horizontal ausgerichtet ist.

13. Vorrichtung nach einem der vorangegangenen Ansprüche,
dadurch gekennzeichnet, daß der Schaft (2) mit wenigstens einer Zielmarke verbunden ist, welche aktiv leuchtet bzw. selbstleuchtend ist und deren Position bzw. Positionsänderung von der Erfassungseinrichtung (5) detektierbar ist, wobei die Zielmarke bzw. die Zielmarken vorzugsweise über eine im Schaft mitgeführte oder den Schaft bildende Lichtleitfaser beleuchtet werden.

14. Vorrichtung nach Anspruch 13, dadurch gekennzeichnet,
daß die Zielmarke durch das Antastelement (3) gebildet ist.

15. Vorrichtung gemäß einem der Ansprüche 1 bis 14, an einer Mehrkoordinaten-Meßmaschine, wobei die Meßmaschine einen Faser-Meßtaster kleinster Bauart aus Glas und eine längs einer Achse verfahrbare Kamera zu dessen optischer Erfassung aufweist, dadurch gekennzeichnet, dass mit Hilfe der Vorrichtung eine abgebrochene Faser des Faser-Meßtasters nachschiebbar und mit Hilfe der Vorrichtung durch Erhitzen des vorderen Endes eine neue Meßkugel anschmelzbar ist.

16. Vorrichtung gemäß einem der Ansprüche 1 bis 15, an einer Mehrkoordinaten-Meßmaschine, wobei die Meßmaschine einen Faser-Meßtaster kleinster Bauart und eine längs einer Achse verfahrbare Kamera zu dessen optischer Erfassung aufweist und wobei die Vorrichtung den Meßtaster aufnimmt und sein separates Verfahren längs einer weiteren Achse ermöglicht - zur einfacheren Fokussierung der Kamera darauf.

17. Vorrichtung gemäß einem der Ansprüche 1 bis 16, an einer Mehrkoordinaten-Meßmaschine, wobei die Meßmaschine einen Faser-Meßtaster kleinster Bauart und eine Kamera zu dessen optischer Erfassung aufweist und wobei die Vorrichtung Blasluft herbeiführt, die in Luftstößen über mindestens einen Teil des Meßtasters zu streichen imstande ist.

18. Verwendung der Vorrichtung nach Anspruch 17, um den Faser- Meßtaster im Falle eines Haftenbleibens nach einer Antastung an ein Meßobjekt mittels eines Luftstoßes wieder zu lösen.

19. Verwendung der Vorrichtung nach Anspruch 17, um den Faser-Meßtaster mittels eines Luftstromes zu reinigen.

20. Verfahren zur Reinigung eines Faser-Meßtasters kleinster Bauart, welcher auf einer Mehrkoordinaten-Meßmaschine angebracht ist und mittels einer Kamera erfaßt wird, bei dem die Reinigung mittels eines Reinigungsbades geschieht, welches ein Ultraschall-Reinigungsbad sein kann.

21. Faser-Meßtaster kleinster Bauart, welcher auf einer Mehrkoordinaten-Meßmaschine anzubringen ist und dort mittels einer Kamera erfaßbar wird, dadurch gekennzeichnet, daß er aus Metall besteht.

22. Vorrichtung gemäß einem der vorheriggen Ansprüche, an einer Mehrkoordinaten-Meßmaschine, wobei die Meßmaschine einen Faser- Meßtaster aus Metall mit einer Meßkugel kleinster Bauart und eine Kamera zu dessen optischer Erfassung aufweist und wobei die Vorrichtung die auf dem Meßtaster angebrachte Meßkugel von oben mittels einer ringförmig Licht abstrahlenden Lichtquelle oder einer ringförmig angeordneten Lichtquelle kleinster Bauart beleuchtet, die sich vorzugsweise in der Halterung befindet, die auch den Faser-Meßtaster hält.
